# EUROPÄISCHE PATENTSCHRIFT

(11) **EP 1 452 409 B1**
(45) Veröffentlichungstag und Bekanntmachung des Hinweises auf die Patenterteilung: **05.04.2006**
(21) Anmeldenummer: 04090029.2
(22) Anmeldetag: 03.02.2004
(51) Int. Cl.: B60R 22/195

(54) **Gurtstraffer bei einer höhenverstellbaren Gurtumlenkeinrichtung**
Seatbelt pretensioner with a height-adjustable belt guide
Prétensionneur de ceinture de sécurité avec un guide ajustable en hauteur

(30) Priorität: 26.02.2003 DE 10309696
(43) Veröffentlichungstag der Anmeldung: 01.09.2004
(73) Patentinhaber: TAKATA-PETRI (Ulm) GmbH, 89081 Ulm (DE)
(72) Erfinder: Herrmann, Thomas, 89171 Illerkirchberg (DE)
(74) Vertreter: Fischer, Uwe

(56) Entgegenhaltungen:
- DE-A- 2 304 878
- DE-A- 10 021 382
- DE-A- 10 119 810
- DE-A- 19 957 794
- DE-U- 20 209 965

## Beschreibung

Die Erfindung bezieht sich auf eine höhenverstellbare Gurtumlenkeinrichtung mit den Mermalen gemäß dem Oberbegriff des Anspruchs 1.

Eine derartige Gurtumlenkeinrichtung ist aus der deutschen Offenlegungsschrift 100 21 382 bekannt. Diese Gurtumlenkeinrichtung weist ein den Sicherheitsgurt umlenkendes Umlenkelement auf, das mit einer Straffeinrichtung in Verbindung steht, mit der sich der Sicherheitsgurt straffen lässt. Die Straffeinrichtung enthält eine Strafffeder, die zum Straffen des Sicherheitsgurtes auf das Umlenkelement einwirkt. Die Straffeinrichtung ist mit einer Arretierungseinrichtung ausgestattet, die die Strafffeder im vorgespannten Zustand arretiert.

Aus der deutschen Gebrauchsmusterschrift 202 09 965 ist ein Schlossstraffer mit einem Motor bekannt, der mit einem komprimierbaren Druckspeicher in Verbindung steht.

Der Erfindung liegt die Aufgabe zugrunde, eine höhenverstellbare Gurtumlenkeinrichtung für einen Sicherheitsgurt anzugeben, durch die die Sicherheit eines durch den Sicherheitsgurt zu schützenden Fahrzeuginsassen verbessert wird.

Diese Aufgabe wird erfindungsgemäß durch eine höhenverstellbare Gutumlenkeinrichtung mit den Merkmalen gemäß Anspruch 1 gelöst. Vorteilhafte Ausgestaltungen der Erfindung sind in Unteransprüchen angegeben.

Ein wesentlicher Vorteil der erfindungsgemäßen höhenverstellbaren Gurtumlenkeinrichtung ist darin zu sehen, dass sich aufgrund der Straffeinrichtung der Sicherheitsgurt vor und/oder während eines Unfalles straffen lässt, wodurch der Sicherheitsgurt straff an dem Fahrzeuginsassen angelegt bzw. dort positioniert wird; durch diese Vorstraffung wird gewährleistet, dass der Sicherheitsgurt seine schützende Funktion voll entfalten kann.

Ein weiterer wesentlicher Vorteil der erfindungsgemäßen höhenverstellbaren Gurtumlenkeinrichtung besteht darin, dass die Straffeinrichtung relativ einfach aufgebaut und sehr leicht sein kann; denn sie wirkt lediglich auf das Umlenkelement des Sicherheitsgurtes, das relativ leicht ist und wenig "zu beschleunigende Masse" aufweist. Die Straffeinrichtung kann damit deutlich kleiner und leichter dimensioniert werden, als dies beispielsweise erforderlich wäre, wenn die Straffeinrichtung an einem vergleichsweise schweren Gurtaufroller des Sicherheitsgurtes zum Zwecke der Gurtstraffung einwirken müsste.

Erfindungsgemäß weist die Straffeinrichtung eine Strafffeder auf, die zum Straffen des Sicherheitsgurtes auf das Umlenkelement einwirkt. Die Straffgeschwindigkeit und die Straffstärke können durch entsprechende Dimensionierung der Federkraft der Strafffeder vorgegeben werden. Mit einer Strafffeder lässt sich insbesondere eine schnellere und stärkere Straffung des Sicherheitsgurtes erreichen, als dies beispielsweise mit einem auf den Sicherheitsgurt einwirkenden Motorantrieb möglich wäre; zumindest müsste der Motor sehr groß und kräftig dimensioniert sein, um eine vergleichbare Straffgeschwindigkeit und Straffstärke zu erreichen. Um einen reversiblen Betrieb der Straffeinrichtung zu erreichen, weist die Straffeinrichtung einen Antriebsmotor auf, mit dem sich die Strafffeder unter eine vorgegebene Vorspannung setzen lässt. Durch das Vorsehen eines für die Strafffeder ausgelegten Antriebsmotors lässt sich gewährleisten, dass nach einem erstmaligen Auslösen der vorgespannten Strafffeder diese wieder in ihren ursprünglichen, gestrafften Zustand zurückversetzt werden kann. Im Gegensatz zu einem beispielsweise pyrotechnischen Antrieb, der nur ein einziges Mal ausgelöst werden kann, lässt sich somit mit einer Strafffeder und zugeordnetem Antriebsmotor ein reversibler bzw. wiederholter Betrieb der Straffeinrichtung gewährleisten. Das Vorspannen des Sicherheitsgurtes wird konstruktiv sehr einfach erreicht, indem das Umlenkelement in Verbindung mit einer Zahnstange steht, in die ein Antriebszahnrad des Antriebsmotors zum Vorspannen der Strafffeder eingreift. Das Antriebszahnrad steht ausschließlich dann mit der Zahnstange in Verbindung, wenn die Strafffeder zu straffen ist. Das Antriebszahnrad ist auf einer Antriebswelle befestigt, die entlang ihrer Antriebswellenachse verschieblich ist. Bei einer solchen Anordnung des Antriebszahnrades auf einer verschiebbaren Antriebswelle lässt sich nämlich erreichen, dass sich nach dem Spannen der Strafffeder der Antriebsmotor von der Zahnstange und der Strafffeder trennen lässt, so dass ein Auslösen der Strafffeder möglich ist, ohne dass eine Rückwirkung auf den Antriebsmotor auftritt bzw. dieser mitgedreht wird. Konstruktiv ist der Antriebsmotor seitlich neben der Zahnstange derart angeordnet, dass durch ein seitliches Verschieben der Antriebswelle entlang der Antriebswellenachse das Antriebszahnrad mit der Zahnstange in Eingriff und umgekehrt außer Eingriff gebracht werden kann.

Im Rahmen einer vorteilhaften Ausgestaltung der Erfindung ist vorgesehen, dass die Straffeinrichtung derart beschaffen ist, dass sie das Umlenkelement zum Straffen des Sicherheitsgurtes im Wesentlichen vertikal nach oben zieht oder drückt. Beispielsweise weisen Dreipunktsicherheitsgurte üblicherweise in Höhe des Schulter-/Brustbereiches des Fahrzeuginsassen ein Umlenkelement auf, das zum Straffen des Sicherheitsgurtes herangezogen werden kann. Demgemäß wird vorgeschlagen, die Straffeinrichtung an einem solchen, in Schulterhöhe angeordneten Umlenkelement anzuordnen und dieses zum Zwecke des Straffens des Sicherheitsgurtes vertikal nach oben zu ziehen oder zu drücken.

Bevorzugt handelt es sich bei der Strafffeder um eine Schraubenfeder, da sich mit einer Schraubenfeder einfach und kostengünstig die Straffung des Sicherheitsgurtes bewirken lässt.

Bevorzugt handelt es sich bei dem Antriebsmotor um einen Elektromotor, da sich ein Elektromotor sehr einfach ansteuem lässt.

Bei einer seitlichen Anordnung des Elektromotors steht die Antriebswelle bevorzugt im Wesentlichen senkrecht zur Längsachse der Zahnstange.

Um eine elektrische Ansteuerung des Straffvorgangs der Strafffeder zu ermöglichen, wird es als vorteilhaft angesehen, wenn das seitliche Verschieben der Antriebswelle elektrisch ansteuerbar ist. Ein solches Verschieben der Antriebswelle lässt sich einfach und damit vorteilhaft erreichen, wenn eine elektrische Verschiebeeinrichtung zum seitlichen Verschieben der Antriebswelle vorhanden ist.

Um zu erreichen, dass der Antriebsmotor möglichst klein dimensioniert sein kann und zum Straffen der Strafffeder möglichst wenig Strom zieht, wird es als vorteilhaft angesehen, wenn zwischen der Antriebswelle und dem Antriebsmotor ein Getriebe angeordnet ist. Bevorzugt weist ein solches Getriebe eine Getriebeuntersetzung von mindestens 1:100 auf.

Um nach Abschluss des Straffvorganges und nach Trennen des Elektromotors von der Strafffeder sicherzustellen, dass die Strafffeder in ihrem vorgespannten Zustand verbleibt, wird die Strafffeder bevorzugt in ihrem vorgespannten Zustand durch eine Arretierungseinrichtung innerhalb der Straffeinrichtung arretiert.

Vorzugsweise ist die Arretierungseinrichtung elektrisch ansteuerbar, um ein Auslösen des Straffvorgangs auf elektrischem Wege zu erreichen. Insbesondere sollte die Arretierungseinrichtung daher elektrisch entriegelbar sein.

Anstelle einer Schraubenfeder bzw. einer mechanischen Feder kann die Strafffeder beispielsweise auch eine Druckluftfeder sein. Zum "Vorspannen" einer solchen Druckluftfeder ist dann bevorzugt eine Pumpeneinrichtung vorzusehen, mit der sich die Druckluftfeder zum Vorspannen unter Druck setzen lässt.

Anstelle einer Pumpeneinrichtung zum Befüllen der Druckluftfeder kann auch eine Druckluftpatrone als Druckluftspeicher vorgesehen sein, dessen gespeicherte Druckluft zum Füllen der Druckluftfeder verwendet wird.

Zur Erläuterung der Figuren zeigt:
- Figur 1: ein Ausführungsbeispiel für eine erfindungsgemäße höhenverstellbare Gurtumlenkeinrichtung und
- Figuren 2a bis 2d: eine Detaildarstellung der höhenverstellbaren Gurtumlenkeinrichtung gemäß der Figur 1; dabei ist in den Figuren 2a bis 2d dargestellt, wie die höhenverstellbare Gurtumlenkeinrichtung zum Straffen des Sicherheitsgurtes eingesetzt und nach einem solchen Straffvorgang wieder in ihren ursprünglichen Zustand zurückversetzt wird.

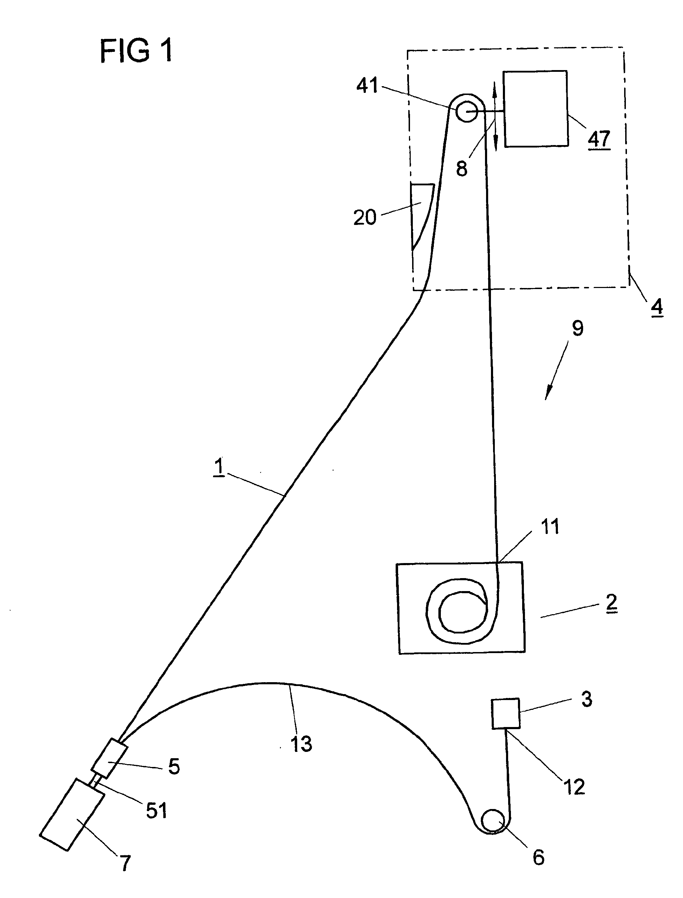

In der Figur 1 erkennt man einen Dreipunktsicherheitsgurt 1, der mit seinem einen Ende 11 mit einem Gurtaufroller 2 in Verbindung steht. Das andere Ende 12 des Sicherheitsgurtes 1 ist an einem Gurtendbeschlag 3 befestigt.

Der Sicherheitsgurt 1 verläuft von dem Gurtaufroller 2 über ein Umlenkelement 41, einen Umlenker 20, eine Umlenkschnalle 5 und ein weiteres Umlenkelement 6 zu dem Gurtendbeschlag 3. Die Umlenkschnalle 5 ist über eine Schlosszunge 51 lösbar in einem Gurtschloss 7 arretierbar.

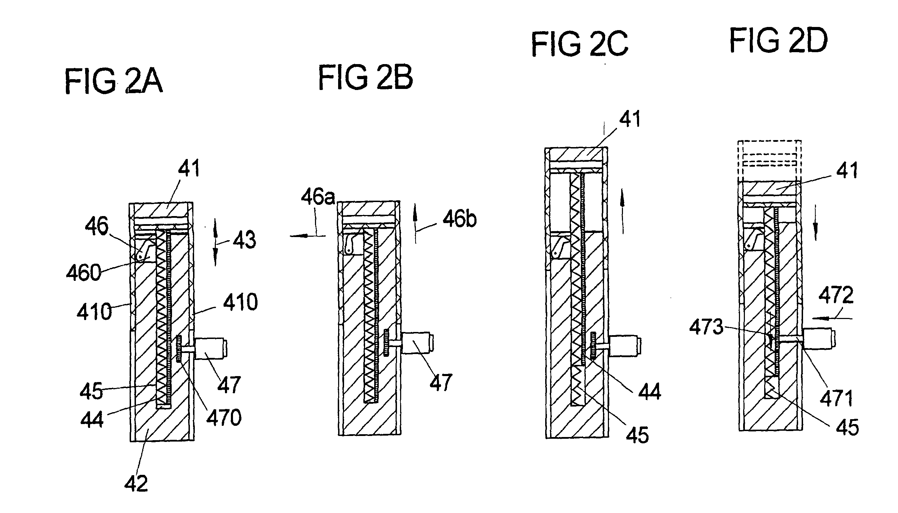

Das Umlenkelement 41 und der Umlenker 20 sind Bestandteile einer höhenverstellbaren Gurtumlenkeinrichtung, die in der Figur 1 durch das Bezugszeichen 4 gekennzeichnet ist. Ein Doppelpfeil 8 deutet an, dass das Umlenkelement 41 der höhenverstellbaren Gurtumlenkeinrichtung 4 vertikal nach oben und unten bewegt werden kann. Somit kann durch eine Bewegung des Umlenkelements 41 der Sicherheitsgurt gestrafft werden. Die vertikale Auslenkung bzw. Bewegung des Umlenkelements 41 erfolgt dabei mittelbar oder unmittelbar mittels eines Elektromotors 47, dessen Funktionsweise im Detail im Zusammenhang mit den Figuren 2a bis 2d erläutert ist. Der Umlenker 20 ist manuell verstellbar und dient zur manuellen Höheneinstellung der Gurtumlenkeinrichtung 4.

Der Gurtaufroller 2, der Gurtendbeschlag 3, das weitere Umlenkelement 6 sowie die höhenverstellbare Gurtumlenkeinrichtung 4 sind an der Seitenstruktur der Karosserie des Fahrzeugs angebracht; handelt es sich bei dem Sicherheitsgurt 1 um einen Dreipunktgurt eines im vorderen Fahrzeugbereich befindlichen Insassen, so können die höhenverstellbare Gurtumlenkeinrichtung 4, der Gurtaufroller 2, der Gurtendbeschlag 3 sowie das weitere Umlenkelement 6 im Bereich der B-Säule 9 des Kraftfahrzeugs befestigt sein.

Bei dem Ausführungsbeispiel gemäß der Figur 1 ist lediglich das obere Umlenkelement 41, das in Höhe des Schulter- bzw. Brustbereichs des Fahrzeuginsassen angeordnet ist, Bestandteil einer höhenverstellbaren Gurtumlenkeinrichtung 4. Stattdessen oder auch zusätzlich könnte auch das weitere (untere) Umlenkelement 6 mit einer entsprechenden höhenverstellbaren Gurtumlenkeinrichtung versehen sein, so dass durch ein vertikales Verschieben des weiteren (unteren) Umlenkelementes 6 der Beckenbereich 13 des Sicherheitsgurtes 1 gestrafft werden könnte.

In den Figuren 2a bis 2d ist die Funktionsweise der höhenverstellbaren Gurtumlenkeinrichtung 4 im Detail dargestellt.

In der Figur 2a erkennt man das Umlenkelement 41, dass über seitliche Führungselemente 410 an einem Träger 42 befestigt ist; die Befestigung des Umlenkelementes 41 an dem Träger 42 ist dabei dergestalt, dass das Umlenkelement 41 entlang der Pfeilrichtung 43 vertikal nach oben bzw. nach unten geführt werden kann.

Das Umlenkelement 41 ist mit einer Zahnstange 44 starr verbunden, die sich in den Träger 42 hineinerstreckt. An der Zahnstange 44 ist eine Strafffeder 45 angebracht, die in der Darstellung gemäß der Figur 2a zusammengedrückt und damit vorgespannt ist. Aufgrund dieser Vorspannung übt die Strafffeder 45 auf die Zahnstange 44 und das Umlenkelement 41 eine vertikal nach oben gerichtete Kraft aus.

In der Figur 2a erkennt man darüber hinaus eine Arretierungseinrichtung 46 mit einem Rastelement 460. Das Rastelement 460 weist eine Rastnase auf, die seitlich in das Sägezahnprofil der Zahnstange 44 eingreift. Aufgrund dieses "Eingreifens" des Rastelements 460 sind die Zahnstange 44 und das Umlenkelement 41 in der in der Figur 2a dargestellten Position fixiert.

In der Figur 2b ist nun dargestellt, wie sich mit der Gurtumlenkeinrichtung 4 der Sicherheitsgurt 1 gemäß der Figur 1 spannen lässt. So deutet ein Pfeil 46a an, wie durch ein Verdrehen des Rastelementes 460 die Rastnase des Rastelementes 460 außer Eingriff mit der Zahnstange 44 gebracht wird. In dieser Position des Rastelements 460 kann die Federkraft der Strafffeder 45 unmittelbar auf die Zahnstange 44 und das Umlenkelement 41 einwirken und das Umlenkelement 41 entlang der Pfeilrichtung 46b vertikal nach oben drücken.

Die Figur 2c zeigt die aufgrund der Strafffeder 45 bewirkte "Straffposition", bei der das Umlenkelement 41 seine obere Maximalposition erreicht hat. In dieser Position ist der Sicherheitsgurt 1 gemäß der Figur 1 gestrafft, so dass der Sicherheitsgurt 1 insbesondere im Schulter-/Brustbereich fest am Fahrzeuginsassen anliegt.

Sollte es nach einem solchen Straffen des Sicherheitsgurtes 1 zu keinem Unfall bzw. zu keinem schweren Unfall gekommen sein, so wird das Umlenkelement 41 wieder in die "aktivierbare Position" gemäß Figur 2a gebracht. Hierfür wird ein Elektromotor 47 benutzt. Der Elektromotor 47 weist ein Antriebszahnrad 470 auf, das in Eingriff mit der Zahnstange 44 gebracht werden kann. Hierzu wird die das Antriebszahnrad 470 und den Elektromotor 47 verbindende Antriebswelle 471 entlang ihrer Antriebswellenachse seitlich verschoben, bis das Antriebszahnrad 470 in Eingriff mit der Zahnstange 44 kommt. Das Verschieben der Antriebswelle 471 ist in der Figur 2d durch einen Pfeil 472 angedeutet.

Nachdem das Antriebszahnrad 470 in Eingriff mit der Zahnstange 44 gebracht wurde, wird durch eine entsprechende Ansteuerung des Elektromotors 47 die Zahnstange 44 nach unten gezogen, was in der Figur 2d durch das Bezugszeichen 473 angedeutet ist. Das Herunterziehen der Zahnstange 44 erfolgt dabei entgegen der Federkraft der Strafffeder 45, so dass die Strafffeder 45 bei einem Absenken der Zahnstange 44 unter eine Druckspannung gesetzt wird.

Wie sich der Figur 2d darüber hinaus entnehmen lässt, ist die Rastnase des Rastelementes 460 während des Herunterziehens des Umlenkelements 41 stets in Kontakt mit der Zahnstange 44; das Rastelement 460 ist daher derart ausgestaltet, dass es eine Abwärtsbewegung entlang der Pfeilrichtung 473 der Zahnstange 44 bzw. des Umlenkelements 41 nicht blockiert und keine störende Wirkung entfaltet. Lediglich in der Rückwärtsrichtung, also entlang der Pfeilrichtung des Pfeils 46b gemäß der Figur 2b blockiert die Rastnase des Rastelementes 460 die Zahnstange 44, so dass nach einem Abschalten des Elektromotors 47 die Zahnstange 44 in ihrer Position verbleibt. Selbst nach einem Wegschieben des Antriebszahnrades 470 entgegen der Pfeilrichtung 472 - also in Richtung Elektromotor 47 - bleibt die Zahnstange 44 in der durch das Rastelement 460 blockierten Position. Die Strafffeder 45 kann somit aufgrund der rastenden Stellung-der Rastnase des Rastelements 460 die Zahnstange und damit das Umlenkelement 41 nicht nach oben drücken.

Nachdem das Antriebszahnrad 470 wieder in Richtung Elektromotor 47 "zurückgeschoben" wurde, befindet sich die Gurtumlenkeinrichtung 4 in der bereits im Zusammenhang mit der Figur 2a erläuterten Ausgangsposition.

Zusammengefasst lässt sich feststellen, dass die höhenverstellbare Gurtumlenkeinrichtung 4 vollständig reversibel ist, denn nach einem ersten Auslenken des Umlenkelementes 41 in vertikaler Richtung nach oben kann dieses durch den Elektromotor 47 in die ursprüngliche Anfangsposition zurückgestellt werden.

### Bezugszeichenliste

- 1: Sicherheitsgurt
- 2: Gurtaufroller
- 3: Gurtendbeschlag
- 4: Höhenverstellbare Gurtumlenkeinrichtung
- 5: Umlenkschnalle
- 6: Weiteres Umlenkelement
- 7: Gurtschloss
- 8: Pfeil
- 9: B-Säule
- 11: Ein Ende des Sicherheitsgurtes
- 12: Anderes Ende des Sicherheitsgurtes
- 13: Beckenbereich des Sicherheitsgurtes
- 20: Umlenker
- 41: Umlenkelement
- 42: Träger
- 43: Pfeil
- 44: Zahnstange
- 45: Strafffeder
- 46: Arretierungseinrichtung
- 46a: Pfeil
- 46b: Pfeil
- 47: Elektromotor
- 51: Schlosszunge
- 410: Führungselemente
- 460: Rastelement
- 471: Antriebswelle
- 472: Pfeil
- 473: Pfeil

## Patentansprüche

1. Höhenverstellbare Gurtumlenkeinrichtung (4) für einen Sicherheitsgurt (1) mit einem den Sicherheitsgurt (1) umlenkenden Umlenkelement (41), wobei
- das Umlenkelement (41) mit einer Straffeinrichtung (44, 45, 47) in Verbindung steht, mit der sich der Sicherheitsgurt (1) straffen lässt,
- die Straffeinrichtung (44, 45, 47) eine Strafffeder (45) aufweist, die zum Straffen des Sicherheitsgurtes (1) auf das Umlenkelement (41) einwirkt, und
- die Straffeinrichtung (44, 45, 47) eine Arretierungseinrichtung (46) aufweist, die die Strafffeder (45) im vorgespannten Zustand arretiert.
**dadurch gekennzeichnet,**
- **dass** die Straffeinrichtung (44, 45, 47) einen Antriebsmotor (47) aufweist, mit dem sich die Strafffeder (45) unter eine vorgegebene Vorspannung setzen lässt,
- **dass** das Umlenkelement (41) in Verbindung mit einer Zahnstange (44) steht, in die ein Antriebszahnrad (470) des Antriebsmotors (47) zum Vorspannen der Strafffeder (45) eingreift,
- **dass** das Antriebszahnrad (470) auf einer Antriebswelle (471) befestigt ist, die entlang ihrer Antriebswellenachse verschieblich ist, und
- **dass** der Antriebsmotor (47) seitlich neben der Zahnstange (44) derart angeordnet ist, dass durch ein seitliches Verschieben der Antriebswelle (471) entlang der Antriebswellenachse das Antriebszahnrad (470) mit der Zahnstange (44) in Eingriff und umgekehrt außer Eingriff gebracht werden kann.

2. Gurtumlenkeinrichtung nach Anspruch 1, **dadurch gekennzeichnet, dass** die Straffeinrichtung (44, 45, 47) derart ausgestaltet ist, dass sie das Umlenkelement (41) zum Straffen des Sicherheitsgurtes (1) im Wesentlichen vertikal nach oben zieht oder drückt.

3. Gurtumlenkeinrichtung nach einem der voranstehenden Ansprüche, **dadurch gekennzeichnet, dass** der Antriebsmotor (47) ein Elektromotor ist .

4. Gurtumlenkeinrichtung nach einem der voranstehenden Ansprüche, **dadurch gekennzeichnet, dass** die Antriebswelle (471) im Wesentlichen senkrecht zur Längsachse der Zahnstange (44) steht.

5. Gurtumlenkeinrichtung nach einem der voranstehenden Ansprüche, **dadurch gekennzeichnet, dass** das seitliche Verschieben der Antriebswelle (471) elektrisch ansteuerbar ist.

6. Gurtumlenkeinrichtung nach Anspruch 5, **dadurch gekennzeichnet, dass** eine elektromagnetische Verschiebeeinrichtung zum seitlichen Verschieben der Antriebswelle (471) vorhanden ist.

7. Gurtumlenkeinrichtung nach einem der voranstehenden Ansprüche, **dadurch gekennzeichnet, dass** zwischen der Antriebswelle (471) und dem Antriebsmotor ein Getriebe angeordnet ist.

8. Gurtumlenkeinrichtung nach Anspruch 7, **dadurch gekennzeichnet, dass** die Getriebeuntersetzung des Getriebes mindestens 1:100 beträgt.

9. Gurtumlenkeinrichtung nach einem der voranstehenden Ansprüche, **dadurch gekennzeichnet, dass** die Arretierungseinrichtung (46) elektrisch ansteuerbar ist.

10. Gurtumlenkeinrichtung nach einem der voranstehenden Ansprüche, **dadurch gekennzeichnet, dass** die Arretierungseinrichtung (46) elektrisch entriegelbar ist.

11. Gurtumlenkeinrichtung nach einem der voranstehenden Ansprüche, **dadurch gekennzeichnet, dass** die Strafffeder (45) durch eine Schraubenfeder gebildet ist.

12. Gurtumlenkeinrichtung nach einem der vorangehenden Ansprüche, **dadurch gekennzeichnet, dass** die Strafffeder (45) eine Druckluftfeder ist.

13. Gurtumlenkeinrichtung nach Anspruch 12, **dadurch gekennzeichnet, dass** die Druckluftfeder mit einer Pumpeneinrichtung in Verbindung steht, mit der sich die Druckluftfeder unter Druck setzen lässt.

## Claims

1. Height-adjustable belt-deflecting device (4) for a seat belt (1), having a deflecting element (41) which deflects the seat belt (1), wherein
- the deflecting element (41) is connected to a tightening device (44, 45, 47) with which the seat belt (1) can be tightened,
- the tightening device (44, 45, 47) has a tightening spring (45) which acts on the deflecting element (41) to tighten the seat belt (1), and
- the tightening device (44, 45, 47) has a locking device (46) which locks the tightening spring (45) in the prestressed state,
**characterized**
- **in that** the tightening device (44, 45, 47) has a driving motor (47) with which the tightening spring (45) can be placed under a predetermined prestress,
- **in that** the deflecting element (41) is connected to a rack (44) in which a driving toothed wheel (470) of the driving motor (47) engages to prestress the tightening spring (45),
- **in that** the driving toothed wheel (470) is fastened on a driving shaft (471) which can be displaced along its driving-shaft axis, and
- "in that the driving motor (47) is arranged laterally next to the rack (44) in such a manner that, by a lateral displacement of the driving shaft (471) along the driving-shaft axis, the driving toothed wheel (470) can be brought into engagement with the rack (44) and conversely can be brought out of engagement with it.

2. Belt-deflecting device according to Claim 1, **characterized in that** the tightening device (44, 45, 47) is designed in such a manner that it pulls or pushes the deflecting element (41) essentially vertically upwards to tighten the seat belt (1).

3. Belt-deflecting device according to one of the preceeding claims, **characterized in that** the driving motor (47) is an electric motor.

4. Belt-deflecting device according to one of the preceding claims, **characterized in that** the driving shaft (471) is essentially perpendicular with respect to the longitudinal axis of the rack (44).

5. Belt-deflecting device according to one of the preceding claims, **characterized in that** the lateral displacement of the driving shaft (471) can be activated electrically.

6. Belt-deflecting device according to Claim 5, **characterized in that** there is an electromagnetic displacement device for the lateral displacement of the driving shaft (471).

7. Belt-deflecting device according to one of the preceding claims, **characterized in that** a gear is arranged between the driving shaft (471) and the driving motor.

8. Belt-deflecting device according to Claim 7, **characterized in that** the gear reduction of the gear is at least 1:100.

9. Belt-deflecting device according to one of the preceding claims, **characterized in that** the locking device (46) can be activated electrically.

10. Belt-deflecting device according to one of the preceding claims, **characterized in that** the locking device (46) can be unlocked electrically.

11. Belt-deflecting device according to one of the preceeding claims, **characterized in that** the tightening spring (45) is formed by a helical spring.

12. Belt-deflecting device according to one of the preceding claims, **characterized in that** the tightening spring (45) is a compressed-air spring.

13. Belt-deflecting device according to Claim 12, **characterized in that** the compressed-air spring is connected to a pump device with which the compressed-air spring can be placed under pressure.

## Revendications

1. Prétensionneur de ceinture de sécurité (4) réglable en hauteur pour une ceinture de sécurité (1) doté d'un élément de prétension (41) prétensionnant la ceinture de sécurité (1),
- l'élément de prétension (41) étant relié à un système de tension (44, 45, 47) pouvant tendre la ceinture de sécurité (1),
- le système de tension (44, 45, 47) comprend un ressort de tension (45) qui agit pour tendre la ceinture de sécurité (1) sur l'élément de prétension, et
- le système de tension (44, 45, 47) comprend un système de blocage (46) qui bloque le ressort de tension (45) à l'état précontraint,
**caractérisé en ce que**
- le système de tension (44, 45, 47) comprend un moteur d'entraînement (47) pouvant soumettre le ressort de tension (45) à une précontrainte prédéfinie,
- l'élément de prétension (41) est relié à une crémaillère (44), dans laquelle se met en prise une roue dentée d'entraînement (470) du moteur d'entraînement (47) afin de précontraindre le ressort de tension (45),
- la roue dentée d'entraînement (470) est fixée sur un arbre d'entraînement (471) qui est mobile le long de son axe d'arbre d'entraînement, et
- le moteur d'entraînement (47) est disposé latéralement à côté de la crémaillère (44), de telle sorte que par un décalage latéral de l'arbre d'entraînement (471) le long de l'axe d'arbre d'entraînement, la roue dentée d'entraînement (470) peut être amenée en prise avec la crémaillère (44) et inversement dégagée de celle-ci.

2. Prétensionneur de ceinture de sécurité selon la revendication 1, **caractérisé en ce que** le système de tension (44, 45, 47) est conçu de telle sorte qu'il tire ou presse vers le haut sensiblement verticalement l' élément de prétension (41) pour tendre la ceinture de sécurité (1).

3. Prétensionneur de ceinture de sécurité selon l'une quelconque des revendications précédentes, **caractérisé en ce que** le moteur d'entraînement (47) est un moteur électrique.

4. Prétensionneur de ceinture de sécurité selon l'une quelconque des revendications précédentes, **caractérisé en ce que** l'arbre d'entraînement (471) est sensiblement perpendiculaire à l'axe longitudinal de la crémaillère (44).

5. Prétensionneur de ceinture de sécurité selon l'une quelconque des revendications précédentes, **caractérisé en ce que** le décalage latéral de l'arbre d'entraînement (471) peut être commandé électriquement.

6. Prétensionneur de ceinture de sécurité selon la revendication 5, **caractérisé en ce qu'**il existe un système de décalage électromagnétique destiné à décaler latéralement l'arbre d'entraînement (471).

7. Prétensionneur de ceinture de sécurité selon l'une quelconque des revendications précédentes, **caractérisé en ce qu'**une transmission est disposée entre l'arbre d'entraînement (471) et le moteur d'entraînement.

8. Prétensionneur de ceinture de sécurité selon la revendication 7, **caractérisé en ce que** le rapport de réduction de la transmission est au moins de 1:100.

9. Prétensionneur de ceinture de sécurité selon l'une quelconque des revendications précédentes, **caractérisé en ce que** le système de blocage (46) peut être commandé électriquement.

10. Prétensionneur de ceinture de sécurité selon l'une quelconque des revendications précédentes, **caractérisé en ce que** le système de blocage (46) peut être déverrouillé électriquement.

11. Prétensionneur de ceinture de sécurité selon l'une quelconque des revendications précédentes, **caractérisé en ce que** le ressort de tension (45) est formé par un ressort hélicoïdal.

12. Prétensionneur de ceinture de sécurité selon l'une quelconque des revendications précédentes, **caractérisé en ce que** le ressort de tension (45) est un ressort à air comprimé.

13. Prétensionneur de ceinture de sécurité selon la revendication 12, **caractérisé en ce que** le ressort à air comprimé est relié à un système de pompage pouvant mettre le ressort à air comprimé sous pression.
